# EUROPEAN PATENT APPLICATION

(11) **EP 4 366 103 A1**
(43) Date of publication of application: **08.05.2024**
(21) Application number: 22275138.0
(22) Date of filing: 03.11.2022
(51) Int. Cl.: H02H 3/20, H02H 9/00, H02J 1/00

(54) **POWER SUPPLY UNIT WRAPPER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A power supply unit wrapper receives one or more low integrity PSU inputs. The PSU wrapper comprises a plurality of protection mechanisms which are configured to receive a respective one power source from the one or more low integrity PSUs. The plurality of protection mechanisms determine a respective voltage characteristic indicative of a respective failure mode in a respective one power source. In response to determining a failure mode based on a respective voltage characteristic in any one of the plurality of protection mechanisms, the one of the plurality of protection mechanisms prevents the respective power source from being selected for use by a safety critical load. The PSU wrapper comprises a selection mechanism connected to at least one of the plurality of protection mechanisms. Where no failure modes are determined for at least one input power source, the selection mechanism selects a PSU input from the PSU input(s) that have no failure mode for use by a safety critical load.

## Description

### FIELD

The present invention relates to safety critical systems, including safety critical control systems including a power supply unit (PSU) wrapper.

### BACKGROUND

The design and development of control systems for safety critical applications is a challenging area. In such safety critical control systems, it is desirable to use simple hardware.

In highly critical safety controlled environments the need for redundancy and monitoring can increase the amount of circuits, monitors and other equipment which augments the cost and weight of the safety control systems. One such example where optimal safety critical monitoring is occurred is in an aircraft. In addition the reduction in weight and cost and further advantages. In this respect it will be useful to be able to use commercial off-the-shelf (COTS) components. Whilst these are inexpensive, they are often insufficiently robust and safe to operate in highly critical monitoring environments.

It is further noted that there are different levels of safety concerns in different environments. So it is useful to be able to provide systems that can be adapted to deal with the different safety concerns. For example in a low safety risk environment little additional monitoring beyond simple temperature and voltage measurements may be required. For major critical situations further additional monitoring may be advisable and for hazardous situations still further monitoring is necessary. In catastrophic situations monitoring should be at the absolute highest level.

An over-voltage output poses a significant safety risk as it can damage and/or compromise components in a system. Previously, to overcome these problems in safety critical systems, high-integrity power supply units (PSUs) are typically used. This is because high-integrity PSUs provide a more reliable source of power which is more likely to provide the required level of safety for a given safety control system. The additional cost make this solution far from optimal.

There is a need for improvements in power supply units used in safety critical systems which overcome at least some of the abovementioned problems.

### SUMMARY

According to an aspect of the present invention, there is provided a power supply unit (PSU) wrapper configured to received one or more low integrity PSU inputs. The PSU wrapper comprises a plurality of protection mechanisms, the plurality of protection mechanisms configured to receive a respective one power source from the one or more low integrity PSU inputs. Each protection mechanism of the plurality of protection mechanisms is configured to determine a respective voltage characteristic indicative of a respective failure mode in a respective one power source from the one or more low integrity PSUs. In response to determining a failure mode based on a respective voltage characteristic in any one of the plurality of protection mechanisms, the one of the plurality of protection mechanisms prevents the respective power source from being selected for use by a safety critical load. The PSU wrapper further comprises a selection mechanism connected to at least one of the plurality of protection mechanisms. In the event that there are no failure modes determined for at least one input from the one or more low integrity PSUs, the selection mechanism is configured to select a low integrity PSU input from the one or more received low integrity PSU inputs that have no failure mode for use by a safety critical load.

In an aspect, a first one of the plurality of protection mechanisms may be configured to determine a voltage magnitude and the respective failure mode comprises the voltage magnitude exceeding a threshold voltage magnitude.

In an aspect, a second one of the plurality of protection mechanisms may be configured to determine whether a voltage magnitude of a respective one power source has been present for a time period and the respective failure mode comprises the voltage magnitude exceeding a threshold voltage for a threshold time period

In an aspect, the threshold voltage associated with the threshold time period may be a function of a magnitude of the voltage of the respective one input from the one or more low integrity PSUs.

In an aspect, wherein a third one of the plurality of protection mechanisms may be configured to determine a second voltage magnitude and the respective failure mode comprises determining that the second voltage magnitude lies outside a predetermined voltage range.

In an aspect, a number of protection mechanisms in the PSU wrapper may be dependent on a safety level selected for the safety critical load.

In an aspect, at least one of the plurality of protection mechanisms may be configured to remedy a respective failure mode.

In an aspect where a failure mode is remedied, remedying a respective failure mode comprises implementing a voltage adjustment on the respective one input from the one or more low integrity PSUs to a predetermined value.

In an aspect, the PSU wrapper may be configured to receive a plurality of low integrity PSU inputs, wherein the input of each of the plurality of low integrity PSUs is configured to be input to a respective plurality of protection mechanisms and wherein the respective plurality of protection mechanisms are independent or isolated from each other.

In an aspect, the plurality of protection mechanisms may comprise an arrangement of two protection mechanisms connected in parallel to one of the one or more low integrity PSU inputs.

In an aspect, the selection mechanism may comprise one or more switches, wherein the one or more switches may be configured to switch between the plurality of low integrity PSU inputs according to predetermined logic.

In an aspect, a first protection mechanism may be a transient protection mechanism and a second protection mechanism may be a crowbar protection mechanism.

In an aspect, the transient protection mechanism may be configured to apply transient protection on the input voltage from a low integrity PSU in response to the input voltage exceeding a threshold magnitude and the crowbar mechanism may be configured to shunt the input voltage from a low integrity PSU in response to the input voltage exceeding the threshold magnitude for greater than a threshold time.

In an aspect, the PSU wrapper may further comprise a load protection mechanism in the plurality of protection mechanisms and wherein the respective load protection mechanism may be configured to disconnect the respective one input low integrity PSU from the selection mechanism in response to the voltage of the respective low integrity PSU exceeding a predetermined voltage range.

In an aspect, a first PSU may be a low integrity PSU and a second PSU may be a high integrity PSU.

In an aspect, a low integrity PSU may be a PSU without built-in test (BIT) testable protection mechanisms.

According to a second aspect of the present invention, there is provided a system for generating a high integrity output from one or more low integrity power supply units (PSUs). The system comprises a PSU wrapper according to any example described herein. The system further comprises one or more low integrity PSUs, wherein the system is configured to use the one or more low integrity PSUs and the PSU wrapper to supply power to a safety critical load.

In a third aspect of the present invention, a method is performed by a PSU wrapper according to any example described herein. The method comprises receiving, at each of the plurality of protection mechanisms, a power source from one or more low-integrity PSU inputs. The method further comprises determining, using each of the plurality of protection mechanisms, a respective voltage characteristic indicative of a respective failure mode in a respective power source from the one or more low-integrity PSU. In response to determining a failure mode based on a respective voltage characteristic in any one of the plurality of protection mechanisms, the method comprises preventing the or each respective power source from being selected for use by a safety critical load. In the event there are no failure modes determined for at least one input from the one or more low integrity PSUs, the method comprises using the selection mechanism to select a low integrity PSU input for use by a safety critical load.

In an aspect, a first one of the plurality of protection mechanisms is configured to determine a voltage magnitude and the respective failure mode comprises the voltage magnitude exceeding a threshold voltage magnitude.

In an aspect, a second one of the plurality of protection mechanisms is configured to determine a whether a voltage magnitude of a respective one power source has been present for a time period and the respective failure mode comprises the voltage magnitude exceeding a threshold voltage for a threshold time period.

In an aspect, the threshold voltage associated with the threshold time period is a function of a magnitude of the voltage of the respective one input from the one or more low integrity PSUs.

In an aspect, a third one of the plurality of protection mechanisms is configured to determine a second voltage magnitude and the respective failure mode comprises determining that the second voltage magnitude lies outside a predetermined voltage range.

In an aspect, wherein at least one of the plurality of protection mechanisms is configured to remedy a respective failure mode.

In an aspect, remedying a respective failure mode comprises implementing a voltage adjustment on the respective one input from the one or more low integrity PSUs to a predetermined value.

In an aspect, the PSU wrapper is configured to receive a plurality of low integrity PSU inputs, wherein the input of each of the plurality of low integrity PSUs is configured to be input to a respective plurality of protection mechanisms and wherein the respective plurality of protection mechanisms are independent from each other.

The power supply unit (PSU) wrapper enables protection against failure modes of the PSU that could undermine system safety. Additionally, the PSU wrapper is designed using simple hardware, such that the use of software, microcode and/or firmware is not needed. Such PSU wrappers may be used in safety critical control systems.

### BRIEF DESCRIPTION OF THE FIGURES

Embodiments of the invention will now be described by way of example only with reference to the figures, in which:
Figure 1 shows an example of a power supply unit wrapper;
Figure 2 shows an example of a method performed by a power supply unit wrapper;
Figures 3A, 3B and 3C show example protection mechanisms; and
Figure 4 shows an example logic for use in the power supply unit wrapper.

### DETAILED DESCRIPTION

The present invention relates to safety critical control systems. In safety critical control systems, it is important to utilise a power supply which provides a high integrity and high availability load. It is also important to uphold as high as possible safety standard. An over-voltage output poses a significant safety risk as it can damage and/or compromise components in a system. To address at least some of the problems in safety critical systems low-integrity or commercial off-the-shelf (COTS) power supply units (PSUs) are used and are provided with a safety critical COTS PSU wrapper to ensure the voltage of the low integrity PSUs are well monitored for more highly critical environments than would normally have been intended.

Low integrity and COTS PSUs (LICPs) are typically unsuitable for use in such safety critical systems as they provide a power source which is less available in that the power source provides an inconsistent output. As referred to herein, availability of a power source means the availability of a power source to support the system to which it is providing power. For example, low integrity PSUs are more prone to sudden variations in voltage or to sudden outages. Additionally, many low-integrity PSUs tend do not comprise Built-In Test (BIT) testable protection mechanisms. As a result, the low integrity PSUs do not provide the required level of safety as it is not possible to observe or monitor defects or outages in the load. Moreover, with low integrity PSUs, dormant and/or latent defects are possible.

Whilst low integrity and COTS PSUs are typically unsuitable for use in safety-critical systems, these forms of PSUs tend to be more easily obtainable than high-integrity PSUs. For example, a low integrity PSU could take the form of an output from a different power supply, batteries, solar cells, a diesel generator. Where there are multiple low integrity/COTS PSU inputs, the low integrity/COTS PSU inputs may all be of the same type as each other in some examples. In other examples, the low integrity/COTS PSU inputs are of different types. In order to address some of the failing of the low integrity PSUs the present invention provides a safety critical COTS PSU wrapper (referred to therein as the PSU wrapper).

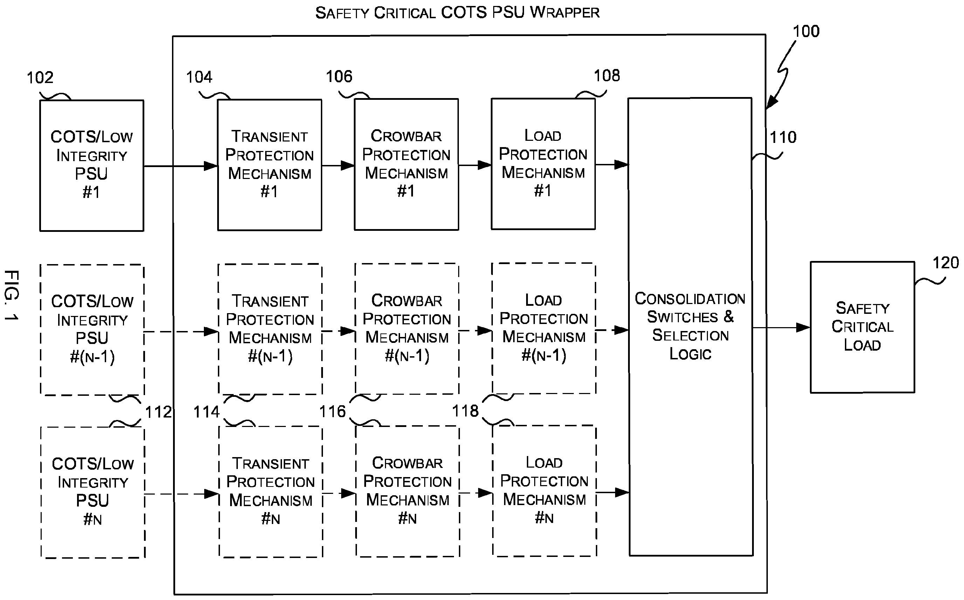

FIG. 1 shows an example of a power supply unit (PSU) wrapper 100 that is used to receive one or more low-integrity COTS PSUs (LICP) 102 and 112 as inputs and provide a high-integrity output 120 for use in a safety-critical system. The PSU wrapper 100 comprises one or more inputs to receive a power source from low integrity PSUs 102 and 112. Each low integrity/COTS PSU LICP 102 112 is connected to a respective arrangement comprising three protection mechanisms. The three protection mechanisms 104, 106, 108, 114, 116, 118 illustrated in FIG. 1 are a transient protection mechanism 104, a crowbar protection mechanism 106 and a load protection mechanism 108.

In a normal situation the input from the low integrity PSU 102 would first be fed to the transient protection mechanism 104, then to the crowbar protection mechanism 106 and finally to a load protection mechanism 108. Where more than one low integrity PSU is present, the PSU wrapper 100 comprises further inputs. Each further input is similarly connected to a respective transient protection mechanism 114, crowbar protection mechanism 116 and load protection mechanism 118. In this way, the protection mechanisms for each of the one or more low integrity PSUs 102, 112, are independent to each other.

The respective output from each of the one or more load protection supplies 108 and 118 is input to consolidation and selection block 110. The consolidation and logic block 110 decides as to which, if any LICP 102, 112 to output to a safety critical load 120. The consolidation and selection block 110 outputs a single LICP 102, 112 power source to the safety critical load 120. By choosing a single LICP 102, 112 for use by the safety critical load, load sharing across a plurality of LICPs 102, 112 is avoided. Therefore, the failures of a given supply are isolated from each other.

As discussed above, the PSU wrapper of FIG. 1 comprises three separate mechanisms for the or each LICP 102, 112 , the three mechanisms being arranged to provide protection against one or more failure modes of a given PSU that could undermine the safety of a system. Examples of such a failure mode are an over-voltage output or protection from unknown and/or undefined input sources. Another failure mode against which a safety critical load could be protected is noise or ripple on a given PSU input. In various examples, the noise or ripple in a given PSU input may be used to discriminate against that source by the consolidation and selection block. In such examples, a noise or ripple detector may be included in the PSU wrapper.

The first protection mechanism is the transient protection mechanism 104. The transient protection mechanism 104 may take the form of electronic hardware TVS diodes, metal oxide varistors, gas discharge tubes etc. Using the transient protection mechanism 104, the PSU wrapper 100 provides high-voltage fast-transient protection against spikes in voltage that the LICP 102, 112 may be able to generate. Thus, even where a high voltage is present in the PSU wrapper 100, this will not be transferred to the safety critical load for use in a safety critical system. If there is a failure at a mechanism, this is alerted and the LICP 102 may be replaced or repaired.

The transient protection mechanism 104 further provides protection to the other mechanisms in its respective arrangement in the PSU wrapper 100 by preventing them from being damaged or compromised by a large rate of change of voltage V, dV/dt. The transient protection is able to limit the rate of increase of a voltage of a given input to a level that will not damage a downstream crowbar protection mechanism 106 or a downstream load protection function. The protection provided by the transient protection mechanism 104 is fast to react to voltage spikes. Nevertheless, it cannot provide sustained protection against long term over-voltage events. The crowbar protection mechanism 106 and the load protection mechanism 108 provide protection against longer duration overvoltages.

The transient protection mechanism 104 is fulfilled using small and/or fast devices, for example, a TVS diode. Where a TVS diode is used, the one or more TVS diodes clamp the supply input voltage to a safe level by providing a low impedance path between the supply and return lines to absorb the energy of the transient voltage. Owing to the nature of small/fast devices, it is not possible to maintain transient protection for an indefinite duration. Thus, where persistent faults occur, crowbar protection is used in addition to transient protection. As used herein, a persistent fault is a large rate of change of voltage dV/dt where a change in voltage over a threshold magnitude occurs for longer than a predetermined amount of time. For example, a persistent fault is one which occurs for greater than 1ms. An example of the threshold magnitude is around 100V.

Crowbar protection mechanism 106 is utilised within the PSU wrapper 100 to provide a high voltage/high current protection circuit that shunts the output of the low-integrity PSU 102 in the event of a persistent fault. The crowbar protection mechanism 106 typically takes the form of a crowbar protection circuit, such as, but not limited to, a thyristor-based or silicon controlled rectifier (SCR)-based crowbar circuit. Other examples of crowbar elements are metal-oxide-semiconductor field-effect transistors (MOSFETs) or insulated-gate bipolar transistors (IGBTs). The crowbar circuit is BIT testable and provides a very low impedance path between a respective supply and return of a respective PSU, serving to short the output of the PSU. In some examples, there is a separate crowbar trigger circuit which triggers the crowbar when an over-voltage has persisted for a certain period of time.

Following a failure mode occurring at the transient protection mechanism 104 for a predetermined time period, to prevent damage to the PSU wrapper 100 itself and to any component using the output from the low integrity PSU, the crowbar protection mechanism shunts the output of the low integrity PSU 102. For example, if dV/dt at the transient protection mechanism 104 exceeds approximately 100V for more than 1 ms, the crowbar protection mechanism 106 shunts the output of the low integrity PSU 102 to zero or near zero. By shunting the output of the low integrity PSU 102, the threat of damage to the safety critical load 120, the PSU wrapper 100 and the crowbar itself, is removed. This is because when the crowbar shunts the PSU, the voltage across that supply will collapse to near zero. The crowbar protection dissipates some power due to it having a non-zero forward voltage and due to the large current passing through it. Whilst the crowbar is slower to respond than the transient protection, it is designed to protect against persistent faults.

Where the voltage across a given power source is zero or close to zero, the consolidation and selection logic 110 will not select such a power source for use by the safety critical load 120. For example, the consolidation and selection logic 110 may select an alternative power supply.

As discussed above, owing to the transient protection mechanism 104 being a small and/or fast device, it is not possible for transient protection to be maintained indefinitely. Therefore, there is a time frame in which the transient protection mechanism 104 is able to provide transient protection without failure. The predetermined time after which the crowbar protection mechanism 106 is triggered is a time period within this time frame. The crowbar protection mechanism 106 ensures that a failure mode, such as an over-voltage failure, does not damage the transient protection mechanism 104 by shunting the voltage at the transient protection mechanism 104 after a predetermined time period.

In some examples, where the magnitude of voltage is detected to be greater than a threshold voltage magnitude, the crowbar protection mechanism 106 is configured to shunt the voltage after the predetermined time delay. In other examples, where the magnitude of voltage is detected to be greater than a threshold voltage magnitude, the crowbar protection mechanism 106 is configured to shunt the voltage after a time period which is a function of the magnitude of the voltage. For example, the function could be one such that the time period for shunting the voltage decreases as the magnitude of the voltage increases. In this way, damage to the mechanisms in the PSU wrapper 100 is reduced by minimising exposure to large magnitudes of voltage. The same principle applies regarding large magnitudes of current.

The crowbar protection element is able to cope with a continuous fault current that the shunted PSU output can deliver. This is because whilst the output voltage is clamped to near zero, the power supply may still be passing a fault current though the crowbar. The crowbar protection mechanism remains latched and is therefore always available . This is because the crowbar protection mechanism is powered from the failed LICP 102, 112. Additionally, the crowbar protection mechanism 106 enables the PSU wrapper to shunt any over-voltage magnitude provided that the crowbar element is rated to cope with the maximum power that the input source can drive.

The third protection mechanism in the protection mechanism array for a given input is the load protection mechanism 108. The load protection mechanism 108 is located physically after the crowbar protection mechanism 106 but operates in parallel with the transient protection mechanism 104 and the crowbar protection mechanism 106. The load protection mechanism 108 serves to regulate the voltage or current passing through it. If it cannot regulate the voltage or current passing through it, the load protection mechanism will disconnect the low integrity PSU 102 input from the consolidation and selection block 110 such that this supply is not used by the safety critical load in the event of a failure mode. The load protection mechanism 108 is activated when voltage regulation is desired, however, the load protection mechanism 108 can only regulate the voltage of a PSU for a limited amount of time due to the power dissipated in the load protection mechanism 108. The load protection mechanism 108 disconnects the load if it cannot continue to provide regulation. For example, where the load protection mechanism 108 is provided at least in part by a MOSFET, the load protection mechanism 108 would disconnect the load because the otherwise the series MOSFET would overheat.

An example of the load protection mechanism 108 is a surge stopping function that regulates the output of the low integrity PSU input to an acceptable voltage or current. An example of a surge stopping function is a voltage sensing function. This sensing function, in some examples, may control a series MOSFET switches which is placed between the supply and the load. However, any solid state switching device may be used by the load protection mechanism 108. Continuing with this example, the load protection function may be a series switch which disconnects the supply from the consolidation and selection block 110. The acceptable voltage or current range is dependent on the component, device or apparatus intending to use the safety critical load. For example, in the context of a marine platform control system or a flight control computer for an aircraft, an acceptable voltage range is 12V to 32V. For example, many components will have an operational voltage or current above which it is unsafe to operate the component. This, therefore, achieves a high integrity output before timing out and disconnecting the load for use by the safety critical load.

All three mechanisms 104, 106, 108 are built-in test (BIT) testable which means that they are applicable for use in high-integrity safety-critical applications. BIT is a mechanism that allows a machine being able to test itself. This results in being able to minimise the time at risk of component failure to support the safety case. The time at risk as used herein is the time between a given component failing and the failure of the component being detected by the BIT functions.

In some examples, the BIT features support self-testing of the following functions:
over and under voltage monitoring of power supply inputs;
over and under voltage monitoring of a sub-rail supply which is used to power the control and monitoring functions;
load protection switch stimuli to verify whether switches in the load protection functions are operating correctly; and
crowbar trigger operation.

The PSU wrapper 100 further contains one or more consolidation switches in the consolidation and selection block 110 which controls which input source the safety-critical load is connected to by using solid state switches actuated by discrete hardware logic, using standard electronic logic devices such as AND / OR / XOR functions etc. In some examples, the selection of the input source is guided by monitoring their voltages and determining whether the voltage stays in range for a sufficient amount of time . As an example, the range used for selecting an input source is 12V to 32V. The monitoring may be achieved by continuously monitoring the voltage of an input source using voltage monitoring functions, which are BIT testable functions. With respect to the voltage staying in range for a sufficient amount of time, in various examples, timer functions are used. This is such that there is a pre-determined time threshold in place to prevent nuisance tripping. In other examples, the input from a given low integrity PSU is selected from each of the plurality of low integrity PSUs based on a predefined order. This predefined order may be built into the hardware. The selection of the low integrity PSU input to use for the safety critical load may also or instead be selected based on its voltage or its supply current.

When selecting an input LICP 102, 112 to use for the safety critical load 120, the switches select a single input LICP 102, 112. Therefore, current sharing does not occur between the one or more inputs from the respective LICPs 102, 112. This is useful when using LICPs 102, 112 whose current sharing performance is unknown. Thus, the consolidation function is BIT testable meaning it is applicable for use in high-integrity safety-critical applications. The consolidation function comprises selection logic. A sequence defined by the selection logic may be hard-coded in the logic. Each of the mechanisms in the PSU wrapper 100 is capable of self-monitoring via the BIT testable features. Thus, in some examples, the various mechanisms 104, 106, 108, 110 perform health checks, which verify the performance and functioning of the BIT features.

The consolidation and selection block 110 makes a continuous determination as to which of the LICP inputs 102, 112 are suitable to serve as a safety critical load. As an example, if the power source from LICP 102 in FIG. 1 were to drop too low to support the safety critical load, the consolidation switch and selection logic present in the consolidation and selection block 110 would switch to a different LICP input 112 if one were present. In another example, where there are a plurality of LICPs 102, 112 and a preferred LICP 102, 112 of the plurality of LICPs becomes unavailable (e.g. because there is an over-voltage output, the power source drops too low for the safety critical load etc.), the safety logic may cause the consolidation and selection block 110 to select a different LICP input 102, 112 to provide the safety critical load. Where the preferred PSU becomes available, the consolidation and selection block may use the one or more switches to switch back to the preferred LICP input. In yet another example, the consolidation and selection block 110 switches between the plurality of LICP 102, 112 inputs using a predetermined sequence of selection.

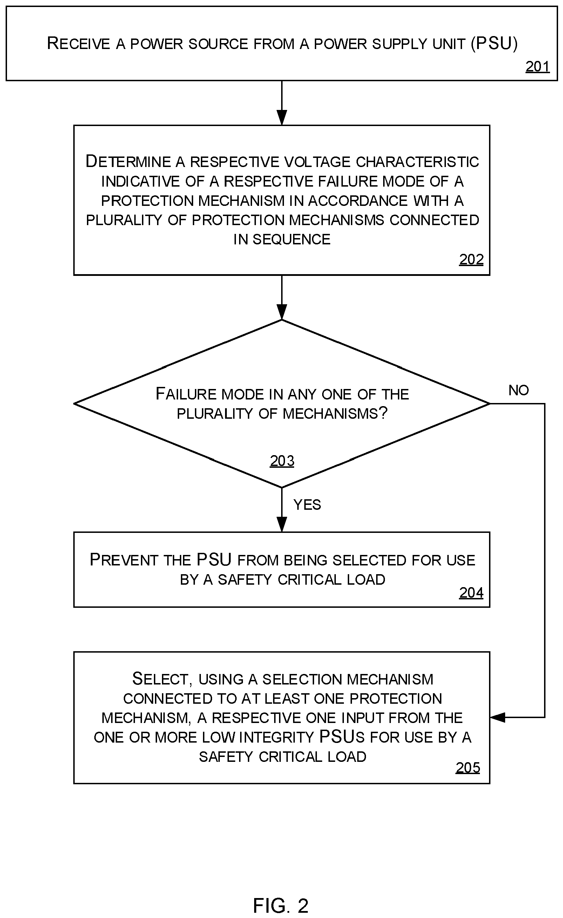

FIG. 2 illustrates a method performed by a PSU wrapper. In this method, one or more protection mechanisms of the PSU wrapper receives 201 a power source from a PSU. Using the one or more protection mechanisms, each protection mechanism determines 202 a respective voltage characteristic indicative of a respective failure mode of a protection mechanism in accordance with a plurality of protection mechanisms connected in sequence. If there is a failure mode 203 in any one of the plurality of protection mechanisms, the PSU is prevented 204 from being selected for use by a safety critical load. If no failure mode is detected in any of the plurality of protection mechanisms, the method comprises selecting 205, using a selection mechanism, a respective one input from the one or more low integrity PSUs for use by a safety critical load. The power supply unit (PSU) providing the input may be a high integrity or a low integrity power source.

Where one of the plurality of protection mechanisms is a transient protection mechanism, such as the transient protection mechanism 104, 114 described above, a voltage characteristic may be a magnitude of the voltage through the transient protection. When the voltage of the input PSU is greater than a threshold voltage, the transient protection mechanism is configured to apply transient protection to the received power source. Where the transient protection mechanism is unable to remedy the failure mode of this voltage characteristic, the PSU input connected to the transient protection mechanism would be prevented from being selected by the selection mechanism of the PSU.

Where one of the plurality of protection mechanisms is a crowbar protection mechanism, such as the crowbar protection mechanism 106, 116 described above, a voltage characteristic may be where the voltage of the input PSU is greater than a second threshold voltage for greater than a threshold time. Where this failure mode occurs, the PSU uses the crowbar protection mechanism to shunt the received power supply from the input PSU. This in turn results in the input PSU being prevented from being selected for use by a safety critical load as the voltage received from the PSU will be shunted to zero or near zero.

Where one of the plurality of protection mechanisms is a load protection mechanism, such as the load protection mechanism 108, 118 described above, a voltage characteristic may be a range of the voltage received from the input PSU. Where the voltage of an input PSU is outside this range, this may be considered to be a failure mode associated with the load protection mechanism. In such cases, the load protection mechanism is configured to disconnect the received power from the consolidation and selection block 110. The load protection mechanism, in some examples, applies a load regulation to regulate the received power supply such that the voltage is regulated to within the threshold range. Where the received voltage is regulated to within a safety critical voltage threshold, the regulated power is provided to the one or more switches at the consolidation and selection block 110. Based on the logic used at the consolidation and selection block 110, the consolidation and selection block 110 outputs the regulated power source for use by a safety critical load.

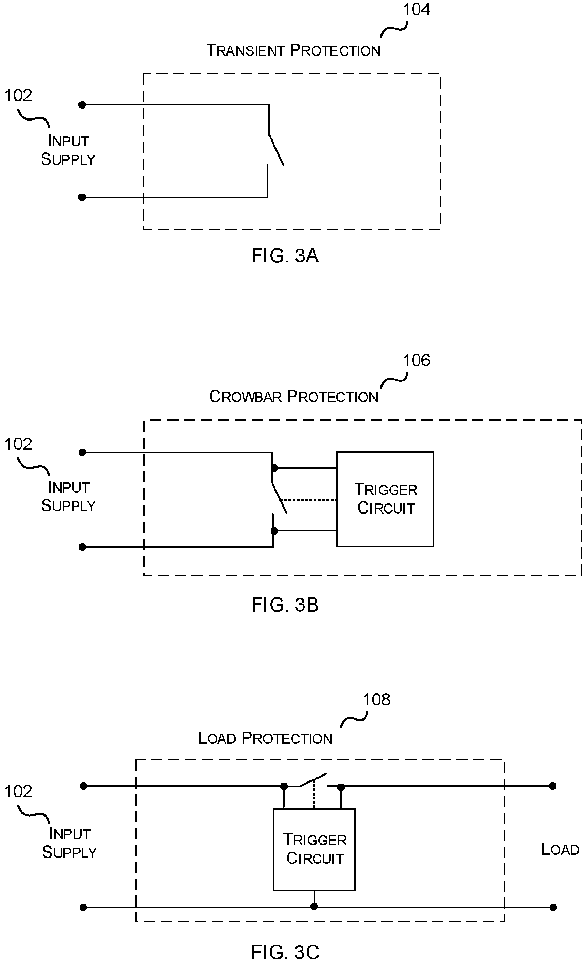

Example protection mechanisms are illustrated in FIGS. 3A, 3B and 3C. Starting with FIG. 3A, an example of a transient protection mechanism 104 is illustrated. In this example, the transient protection mechanism 104 receives power directly from an input power supply 102. The transient protection mechanism 104 is a self-triggering shunting element that transitions to low impedance in a short period of time when a magnitude of a voltage exceeds a threshold value.

FIG. 3B illustrates an example of a crowbar protection mechanism 106. In this example, the crowbar protection mechanism 106, like the transient protection mechanism 104 described above with respect to FIG. 3A, also receives power directly from the input power supply 102. Similarly to the transient protection mechanism 104, the crowbar protection mechanism may be a shunting element that transitions to low impedance when triggered. In this example, the crowbar protection mechanism 106 is triggered via a trigger circuit configured to detect a failure mode based on a voltage characteristic, the voltage characteristic being a magnitude of the voltage over a threshold period of time. The trigger circuit in this example is what causes the crowbar protection circuit to be shunted.

An example of a load protection mechanism 108 is illustrated in FIG. 3C. In this example, the load protection mechanism 108 is connected directly to the input supply 102. The load protection mechanism 108 also comprises a trigger circuit. In this example, the load protection mechanism 108 is a series element which transitions to high impedance when triggered by the trigger circuit. In response to detecting a failure mode associated with the load protection mechanism, the input supply voltage is prevented from being used by the safety critical load as a result of the high impedance. However, as discussed above, the load protection mechanism may also comprise one or more solid state switches which disconnect the voltage supply from the consolidation and selection block 110, thereby preventing the input source from being used by the safety critical load 120.

The three protection mechanisms depicted in FIGS. 3A to 3C may all be active at once. This is because each protection mechanism is independent of the other one or more protection mechanisms. Additionally, the plurality of protection mechanisms are also inactive in a healthy supply. As an example, each protection mechanism may be connected in parallel to an input power supply 102. In the event of a failure mode associated with a given voltage characteristic, the respective one or more protection mechanisms become active.

An example of how the three protection mechanisms may operate in use is as follows. In this example, the transient protection mechanism 104 is configured to shunt the input supply 102 when the supply voltage rises towards a level that could cause damage the crowbar protection mechanism 106 or cause it to malfunction. Typically, for this usage context, a magnitude of voltage which could damage the crowbar protection mechanism is around 100V. The crowbar protection mechanism 106 is configured to shunt the input supply 102 when the supply voltage rises towards a level that could damage the load protection mechanism 108. Typically, for this usage context, the threshold voltage for a threshold time period that will cause the crowbar protection mechanism 106 to trigger is in the range of 50V to 100V. As discussed above, the load protection mechanism 108 is configured to disconnect the load when the supply voltage rises to a level that could cause damage / malfunction of the load. Typically, for this usage context, this could be in the range of 12V to 32V.

In this way, the various protection mechanisms protect the PSU wrapper and the mechanisms therein from damage, whilst also providing a high integrity output for a safety critical load.

The number of protection mechanisms forming part of the plurality of protection mechanisms may vary depending on the usage context of the PSU wrapper. For example, where a high level of safety is desired, at least three protection mechanisms as described in respect of FIG. 1 may be used. However, where such a high confidence in the safety level of a power supply that is powering a load is not required, fewer protection mechanisms may be used. For example, where a high level of safety is not required, the PSU wrapper may only comprise two protection mechanisms. In this example, the two protection mechanisms may be the transient protection mechanism 104 and the crowbar protection mechanism 106.

In various examples, where there are a plurality of input PSUs, each power supply input is configured to provide a voltage supply to a respective plurality of protection mechanisms. That is, for a given PSU input, the plurality of protection mechanisms associated with that PSU input are independent of those of the other PSU input(s). Consequently, a single fault within a respective plurality of protection mechanisms will only affect one supply input, rather than a portion or all the supply inputs.

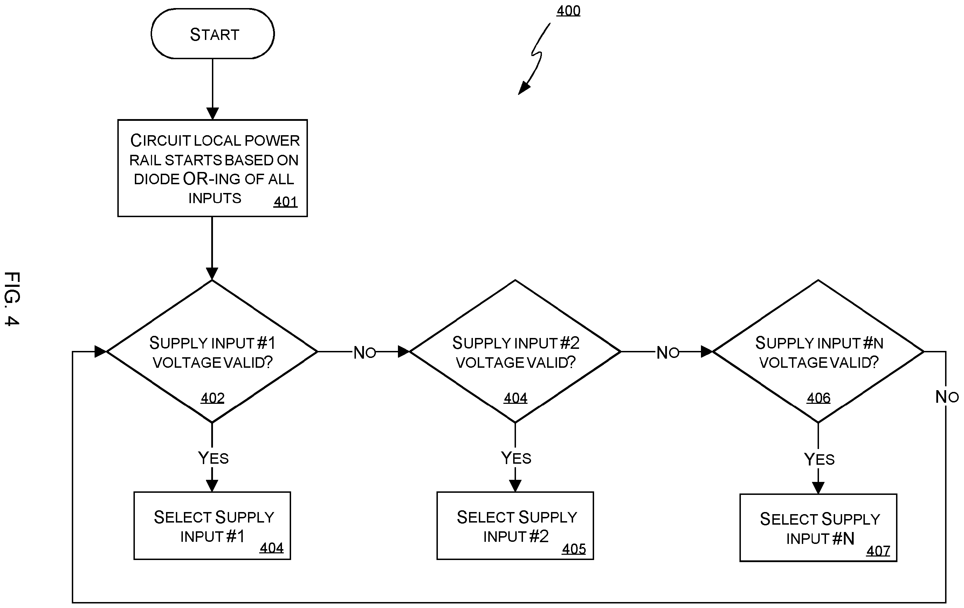

FIG. 4 shows an example of logic used by the consolidation and selection block 110. In this example, there are a plurality of power supply units supplying power to the PSU wrapper. The consolidation and selection block 110 is configured to execute 401 an OR operation on all inputs to the consolidation and selection block 110. In this example, the selection logic is sequential in that the first input which does not have a failure mode present in any one of its protection mechanisms is selected as the supply input for the safety critical load 120. FIG. 4 illustrates that where the first supply has a voltage without a failure mode 402, this supply is selected 403 as the supply for the safety critical load. If there is a failure mode detected in the first supply, the consolidation and selection block 110 looks at whether there is a failure mode 404 in the second voltage supply. If there is no failure mode detected in the second voltage supply, this is selected 405 as input to the safety critical load. This process continues for all PSUs until a voltage supply without a failure mode is selected.

The selection logic uses a configured, pre-determined selection order of the input supplies. Supply voltage is a parameter which may be used to determine the validity of a given input supply. When a selected supply's voltage falls out of range, the system is configured to deselect it and select the next available supply. If the next available supply is not valid, the system is configured to continue to the next supply until a valid supply is selected. As an example, where an input supply is selected that has a valid voltage but which has a current which is unable to support the load, the supply is configured to be selected based on its valid voltage. However, the system is configured to deselect this supply as the voltage decreases due to load demand.

In various examples, the system is configured to prevent continuous selection of previously invalid supplies. For example, the consolidation and selection block may comprise a timer to inhibit the selection of a previously invalid supply within a predetermined time period. The predetermined time period may be set through hardware component selection to any value in the range of microseconds through to many hours. Instead of, or in addition to, the timer, a counter and latch circuit may be included in the consolidation and selection block 110 to limit the number of times a supply is reselected.

The present invention is described with reference to the figures and description, but it will be appreciated that scope of protection extends beyond the example shown and defined in the claim scope.

Where LICPs are used, there is no need for software, firmware or microcode and simple logic encoded into hardware may be used to control the LICPs. However, where high integrity PSUs are used, software, firmware and/or microcode are often used to maintain the high integrity and availability of the PSU. Using simple components to provide a high integrity output requires significantly less analysis and certification than complex devices, such as micro-processors, would require. This in turn reduces design cost significantly. Moreover, the use of simple components enables a simplex design to be used.

Additionally, as hardware logic is executed at a much faster rate than software, firmware or microcode, for example, it would be advantageous to use LICPs in safety-critical systems. Moreover, hardware logic typically requires space and less power consumption than an equivalent software implementation, which is especially useful in a safety-critical power supply context.

In the examples described herein, a power supply unit (PSU) wrapper is provided. The PSU wrapper takes one or more LICPs as input and provides a high-integrity output for use in a safety-critical system. In some examples, the PSU wrapper may take a high integrity PSU as input to the system in the place of, or in combination with, a low integrity PSU input. The number of inputs to the PSU wrapper vary depending on a minimum level of safety required by a safety-critical system.

As an example, in automotive vehicles for land transport, the minimum level of safety may include preventing a failure mode of a PSU from compromising one or more components in the automotive vehicle. In this example, preventing possible failure modes, such as an over-voltage output, of a single low-integrity or high integrity PSU is sufficient to achieve the required minimum level of safety. This is because the PSU wrapper will either output a load which is within an acceptable range for the component or device being powered by the one or more PSUs, or will have no output if a failure mode of the low integrity or high integrity PSU has occurred.

As another example, in aircraft such as aeroplanes, helicopters and unmanned air vehicles (UAVs), a greater safety level may be required in producing a high integrity output. In this example, in addition to preventing possible failure modes, such as an over-voltage output, from compromising one or more components of the aircraft, a high availability of power may also be within the minimum safety requirement. In examples such as these, there may be more than one low integrity or COTS PSU input. This is because where one low integrity input fails or is disconnected by the PSU wrapper, there is at least one other low integrity or COTS PSU that can be used in its place. Additionally, owing to the use of hardware logic, switching between various low integrity PSUs occurs faster than if software were to be used. Thus, having multiple low integrity PSU inputs enables the PSU wrapper to switch between power sources as they lose power or are producing an over-voltage output. Equally, where a low-integrity PSU starts producing a power output within an acceptable range where it had previously stopped producing power, or where it had previously produced an over-voltage, the PSU wrapper may switch back to that low integrity PSU.

## Claims

1. A power supply unit (PSU) wrapper (100) configured to receive one or more low integrity PSU inputs (102, 112), the PSU wrapper (100) comprising:
a plurality of protection mechanisms (104, 106, 108, 114, 116, 118) configured to receive a respective one power source from the one or more low integrity PSUs (102, 112),
wherein each of the plurality of protection mechanisms (104, 106, 108, 114, 116, 118) is configured to determine a respective voltage characteristic indicative of a respective failure mode in a respective one power source from the one or more low integrity PSUs (102, 112); and,
wherein in response to determining a failure mode based on a respective voltage characteristic in any one of the plurality of protection mechanisms (104, 106, 108, 114, 116, 118), the one of the plurality of protection mechanisms (104, 106, 108, 114, 116, 118) prevents the respective power source from being selected for use by a safety critical load (120); and
a selection mechanism connected to at least one of the plurality of protection mechanisms (104, 106, 108, 114, 116, 118), wherein in the event there are no failure modes determined for at least one input from the one or more low integrity PSUs (102, 112), the selection mechanism is configured to select a low integrity PSU input (102, 112) from the one or more received low integrity PSU inputs (102, 112) that have no failure mode for use by a safety critical load (120).

2. The PSU wrapper of claim 1, wherein a first one of the plurality of protection mechanisms is configured to determine a voltage magnitude and the respective failure mode comprises the voltage magnitude exceeding a threshold voltage magnitude.

3. The PSU wrapper of claims 1 or 2, wherein a second one of the plurality of protection mechanisms is configured to determine whether a voltage magnitude of a respective one power source has been present for a time period and the respective failure mode comprises the voltage magnitude exceeding a threshold voltage for a threshold time period.

4. The PSU wrapper of claim 3, wherein the threshold voltage associated with the threshold time period is a function of a magnitude of the voltage of the respective one input from the one or more low integrity PSUs.

5. The PSU wrapper of any preceding claim, wherein a third one of the plurality of protection mechanisms is configured to determine a second voltage magnitude and the respective failure mode comprises determining that the second voltage magnitude lies outside a predetermined voltage range.

6. The PSU wrapper of any preceding claim where in a number of protection mechanisms is dependent on a safety level selected for the safety critical load.

7. The PSU wrapper of any preceding claim, wherein at least one of the plurality of protection mechanisms is configured to remedy a respective failure mode.

8. The PSU wrapper of claim 7, wherein remedying a respective failure mode comprises implementing a voltage adjustment on the respective one input from the one or more low integrity PSUs to a predetermined value.

9. The PSU wrapper of any preceding claim, wherein the PSU wrapper is configured to receive a plurality of low integrity PSU inputs, wherein the input of each of the plurality of low integrity PSUs is configured to be input to a respective plurality of protection mechanisms and wherein the respective plurality of protection mechanisms are independent from each other.

10. The PSU wrapper of claim 9, wherein the selection mechanism comprises one or more switches and wherein the one or more switches are configured to switch between the plurality of low integrity PSU inputs according to predetermined logic.

11. The PSU wrapper of claims 9 or 10, wherein a first protection mechanism is a transient protection mechanism and a second protection mechanism is a crowbar protection mechanism.

12. The PSU wrapper of claim 11, wherein the transient protection mechanism is configured to apply transient protection on the input voltage from a low integrity PSU in response to the input voltage exceeding a threshold magnitude and the crowbar mechanism is configured to shunt the input voltage from a low integrity PSU in response to the input voltage exceeding the threshold magnitude for greater than a threshold time.

13. The PSU wrapper of claims 9 to 12, wherein the PSU wrapper further comprises a load protection mechanism in the plurality of protection mechanisms and wherein the respective load protection mechanism is configured to disconnect the input low integrity PSU from the selection mechanism in response to the voltage of the respective low integrity PSU exceeding a predetermined voltage range.

14. A system for generating a high integrity output from one or more low integrity power supply units (PSU) (102, 112), comprising:
a power supply unit (PSU) wrapper (100) according to any one of claims 1 to 13; and
one or more low integrity PSUs (102, 112), wherein the system is configured to use the one or more low integrity PSUs (102, 112) and the PSU wrapper (100) to supply power to a safety critical load (120).

15. A method to be implemented by a power supply unit (PSU) wrapper (100), the PSU wrapper (100) comprising a plurality of protection mechanisms (104, 106, 108, 114, 116, 118) and a selection mechanism connected to at least one of the plurality of protection mechanisms (104, 106, 108, 114, 116, 118), the method comprising:
receiving (201), at each of the plurality of protection mechanisms (104, 106, 108, 114, 116, 118), a power source from one or more low-integrity PSU (102, 112) inputs;
determining (202), using each of the plurality of protection mechanisms (104, 106, 108, 114, 116, 118), a respective voltage characteristic indicative of a respective failure mode in a respective power source from the one or more low-integrity PSU;
in response to determining (203) a failure mode based on a respective voltage characteristic in any one of the plurality of protection mechanisms (104, 106, 108, 114, 116, 118), preventing (204) the or each respective power source from being selected for use by a safety critical load (120); and
in the event there are no failure modes determined for at least one input from the one or more low integrity PSUs (102, 112), using the selection mechanism to select (205) a low integrity PSU (102, 112) input for use by a safety critical load (120).
